# EUROPÄISCHE PATENTSCHRIFT

(11) **EP 1 081 507 B1**
(45) Veröffentlichungstag und Bekanntmachung des Hinweises auf die Patenterteilung: **25.07.2007**
(21) Anmeldenummer: 00116750.1
(22) Anmeldetag: 03.08.2000
(51) Int. Cl.: G01T 1/29

(54) **Vorrichtung zum Auslesen von in einer Speicherschicht abgespeicherten Informationen durch Anregungsstrahlung und Empfangsmittel**
Device for reading out information stored in a memory layer using an excitation beam and a detecting means
Dispositif pour lire des informations contenues sur une surface de mémorisation avec un rayonnement d'excitation et un moyen de détection

(30) Priorität: 07.08.1999 DE 19937416
(43) Veröffentlichungstag der Anmeldung: 07.03.2001
(73) Patentinhaber: Agfa-Gevaert HealthCare GmbH, 51373 Leverkusen (DE)
(72) Erfinder: Gebele, Herbert, 82054 Sauerlach (DE); Müller, Jürgen, 81545 München (DE); Stahl, Werner, 85551 Heimstetten (DE)

(56) Entgegenhaltungen:
- EP-A- 0 776 126
- US-A- 4 661 704
- US-A- 4 778 995
- US-A- 4 926 045

## Beschreibung

Die vorliegende Erfindung betrifft eine Vorrichtung zum Auslesen von in einer Speicherschicht abgespeicherten Informationen gemäß dem Oberbegriff des Anspruchs 1.

Insbesondere für medizinische Zwecke wird von einem Objekt, beispielsweise einem Patienten, mittels einer Röntgenstrahlung ein Bild erzeugt, das in einer Speicherschicht als latentes Bild abgespeichert wird. Als Speicherschicht wird dabei zumeist ein Phosphorträger verwendet. Zum Auslesen des in der Speicherschicht abgespeicherten Röntgenstrahlenbildes wird die Speicherschicht mittels einer Strahlungsquelle angeregt. Sie emittiert daraufhin aufgrund dieser Anregung Licht, das eine Intensität entsprechend des abgespeicherten Röntgenstrahlungsbildes aufweist. Das von der Speicherschicht ausgesandte Licht wird von einem Empfangsmittel empfangen und anschließend in elektrische Signale gewandelt, so daß das in der Speicherschicht abgespeicherte Röntgenstrahlungsbild anschließend sichtbar gemacht werden kann. Das Röntgenstrahlungsbild kann beispielsweise direkt auf einem Monitor dargestellt oder auch auf einen speziell für Röntgenbilder verwendbaren fotografischen Röntgenfilm geschrieben werden. Eine solche Vorrichtung zum Auslesen von in einer Speicherschicht abgespeicherten Informationen ist beispielsweise aus der vorveröffentlichten Patentanmeldung DE 197 52 925 A1 bekannt. Bei dieser Vorrichtung soll das von der Speicherschicht ausgesandte Licht sehr genau auf das Empfangsmittel abgebildet werden. Zur Erhöhung des Kompaktheitsgrades soll der Abstand zwischen Speicherschicht und Empfangsmittel gering sein

Das Patent US 4,926,045 offenbart eine Vorrichtung, bei welcher der Abstand zwischen Phosphorplatte und Lichtleiter durch ein dazwischen liegendes optisches Filter gehalten wird. Bei der in dem Patent US 4,661,704 beschriebenen Vorrichtung wird der Abstand zwischen einem Filter und der Phosphorplatte durch eine transparente Abstandsschicht eingestellt. Bei beiden Vorrichtungen ist es nicht möglich, den Abstand zwischen dem Empfangsmittel und der Phosphorplatte während der Relativbewegung zwischen dem Empfangsmittel und der Phosphorplatte zu variieren. Das Patent US 4,778,995 beschreibt eine Vorrichtung, bei welcher der Abstand zwischen Phosphorplatte und Detektor durch eine zwischen diesen eingebrachte Flüssigkeit eingestellt wird, welche zur Brechungsindexanpassung geeignet ist. Die Verwendung einer Flüssigkeit zur Abstandseinstellung ist jedoch mit einem erheblichen apparativen Aufwand verbunden.

Der vorliegenden Erfindung liegt die Aufgabe zugrunde, eine gute Qualität bei der Wiedergabe einer in einer Speicherschicht abgespeicherten Information zu ermöglichen.

Diese Aufgabe wird gemäß der technischen Lehre des Anspruchs 1 gelöst.

Gemäß der vorliegenden Erfindung wird gewährleistet, daß zwischen dem Empfangsmittel und der Speicherschicht ein vorgegebener Abstand eingehalten werden kann. Dieser Abstand soll durch das erfindungsgemäß vorgesehene Abstandsmittel vorteilhafterweise möglichst konstant und des weiteren sehr klein einstellbar sein, so daß eine große Menge der von der angeregten Speicherschicht emittierten Strahlung durch das Empfangsmittel detektiert werden kann. Aufgrund des erfindungsgemäß vorgesehenen Abstandsmittels können auftretende, nicht erwünschte Abstandsänderungen sehr schnell ausgeregelt werden. Solche Abstandsänderungen können beispielsweise dann auftreten, wenn die Oberfläche der Speicherfolie herstellungsbedingt Ungenauigkeiten aufweist oder aber von außen Erschütterungen oder Stöße auf die erfindungsgemäße Vorrichtung wirken, die sich auch auf den Abstand zwischen Empfangsmittel und Speicherschicht auswirken. Durch das erfindungsgemäß vorgesehene Abstandsmittel können Berührungen zwischen der Speicherschicht und dem Empfangsmittel, und damit deren mögliches Verkratzen, vermieden werden. Des weiteren kann eine Artefaktenbildung bei der Darstellung des aus der Speicherschicht ausgelesenen Röntgenbildes, eine Verfälschung der Ortsauflösung und/oder eine schlechte Bildschärfe weitgehend verhindert werden.

Das Abstandsmittel enthält vorteilhafterweise eine Luftschicht. Mit einer solchen Luftschicht sind sehr geringe Abstände zwischen Speicherschicht und Empfangsmittel einstellbar. Die Luftschicht kann einfachheitshalber und sehr exakt mittels Luftdüsen, die in dem Abstandsmittel enthalten sind, erzeugt werden. Diese Luftdüsen sind an eine Luftzufuhr angeschlossen.

In einer vorteilhaften Ausgestaltung der Erfindung weist die Vorrichtung ein transparentes Trägermaterial auf, auf das die Speicherschicht aufgebracht ist. Das Empfangsmittel ist dann auf der einen und die Strahlungsquelle auf der anderen Seite der Speicherschicht angeordnet. Zwischen der Strahlungsquelle und der Speicherschicht kann dann ein weiteres Abstandsmittel vorgesehen werden. Dies ist insbesondere dann vorteilhaft, wenn zwischen der Speicherschicht und der Strahlungsquelle eine Relativbewegung zum Anregen der Speicherschicht ausgeführt wird, da Berührungen der Strahlungsquelle und der Speicherschicht vermieden werden können.

In einer weiteren vorteilhaften Ausgestaltung der Erfindung weist die Vorrichtung ein Kraftmittel, insbesondere eine Feder, auf, mit dem eine Kraft von dem Empfangsmittel in Richtung der Speicherschicht ausgeübt werden kann. Auf diese Weise ist es möglich, die erfindungsgemäße Vorrichtung lagenunabhängig benutzen zu können. Das Kraftmittel gewährleistet somit, unabhängig von der Richtung der auf das Empfangsmittel wirkenden Schwerkraft, eine Kraftausübung zum geeigneten Einstellen des Abstandes.

Weitere vorteilhafte Ausgestaltungen der Erfindung sind den abhängigen Ansprüchen zu entnehmen.

Im folgenden werden die Erfindung und ihre Vorteile anhand von Ausführungsbeispielen und Zeichnungen beschrieben. Es zeigen:
- Fig. 1: ein erstes Ausführungsbeispiel der erfindungsgemäßen Vorrichtung mit einem Abstandsmittel zwischen Speicherschicht und Empfangsmittel,
- Fig. 2: ein zweites Ausführungsbeispiel der erfindungsgemäßen Vorrichtung mit einem weiteren Abstandsmittel zwischen Strahlungsquelle und Speicherschicht und
- Fig. 3: ein drittes Ausführungsbeispiel der erfindungsgemäßen Vorrichtung mit einem sogenannten "flying spot"-Lasersystem als Strahlungsquelle.

Im folgenden werden für gleiche und gleich wirkende Elemente durchweg gleiche Bezugszeichen verwendet.

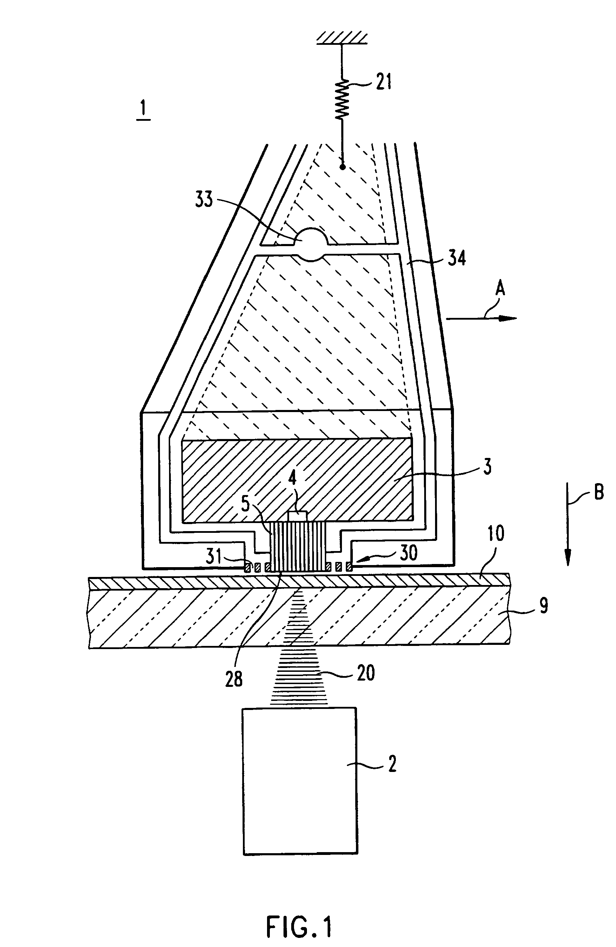

Die Fig. 1 zeigt eine schematische Darstellung eines ersten Ausführungsbeispiels einer erfindungsgemäßen Lesevorrichtung 1 mit einer Phosphorschicht 10, die auf einem transparenten Trägermaterial 9 angeordnet ist. Die Phosphorschicht 10 dient als Speicherschicht, in der mittels Röntgenstrahlung ein latentes Röntgenbild abgespeichert wurde. Dieses latente Röntgenbild kann mittels der Lesevorrichtung 1 aus der Phosphorschicht 10 ausgelesen und zur Darstellung auf einem Monitor oder einem Röntgenfilm aufbereitet werden.

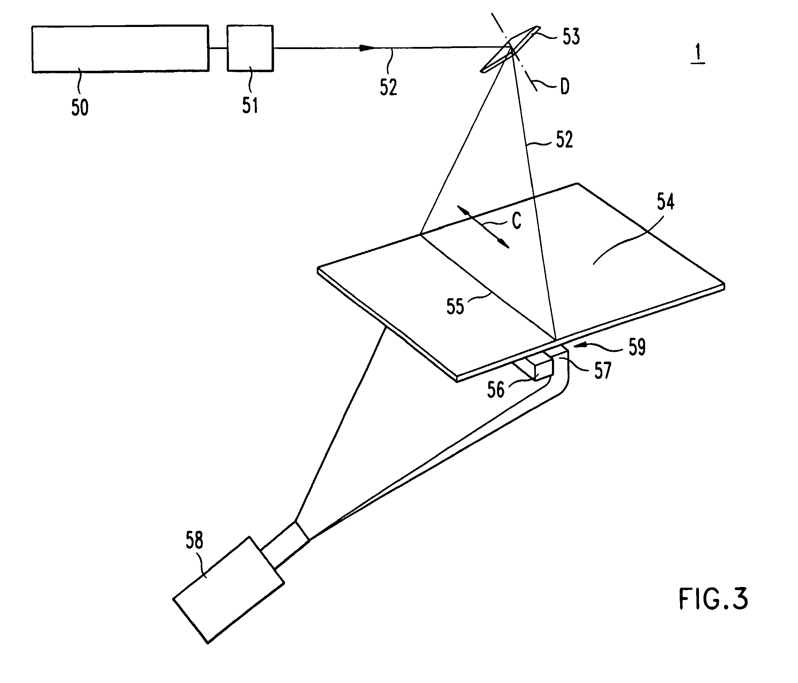

Dazu weist die Lesevorrichtung 1 eine Strahlungsquelle 2 auf, die hier als Linienlichtquelle ausgestaltet ist und eine Vielzahl von nebeneinander angeordneten Laserdioden enthält. Die Strahlungsquelle 2 enthält 4 096 parallel in einer Linie nebeneinander angeordnete Laserdioden. Mit diesen Laserdioden kann eine Zeile der Phosphorschicht 10 zum Emittieren von Strahlung angeregt werden. Stellvertretend ist in die Fig. 1 eine Laserstrahlung 20 eingezeichnet, die von einer der Laserdioden der Strahlungsquelle 2 in Richtung der Phosphorschicht 10 emittiert wird. Die Laserdioden der Strahlungsquelle 2 sind möglichst senkrecht auf die Phosphorschicht 10 ausgerichtet, so daß die von den einzelnen Laserdioden ausgesandte Strahlung direkt auf die Phosphorschicht 10 trifft. Die Strahlungsquelle 2 erstreckt sich im wesentlichen über die gesamte Breite der Phosphorschicht 10, über die Informationen abgespeichert werden können. Anstelle der mit Laserdioden ausgestalteten Strahlungsquelle 2 kann ebenso eine andere Strahlungsquelle verwendet werden. Fig. 3 zeigt dazu weiter unten beispielsweise ein Ausführungsbeispiel mit einer sogenannten "flying spot"-Laserstrahlungsquelle.

Mit der linienförmigen Strahlungsquelle 2 kann eine Zeile der Phosphorschicht 10 zum Emittieren von Strahlung angeregt werden, die Informationen entsprechend des in dieser angeregten Zeile enthaltenen Teils des Röntgenbildes emittiert. Zur Detektion der von der angeregten Zeile der Phosphorschicht emittierten Lichtstrahlung weist die Lesevorrichtung 1 des weiteren eine "charge coupled device"(CCD)-Zeile auf. Die CCD-Zeile 3 enthält eine Vielzahl von parallel in einer Linie nebeneinander angeordneten Fotodetektoren. Mit Hilfe dieser Fotodetektoren kann eine fotoelektrische Wandlung der empfangenen Lichtstrahlung durchgeführt werden. Jeder Fotodetektor stellt ein Punktelement des Empfangsmittels dar und kann eine von einem der angeregten Punkte der Phosphorschicht 10 ausgesandte Lichtstrahlung empfangen. Im vorliegenden Ausführungsbeispiel gemäß der Fig. 1 sind daher in der CCD-Zeile 3 4 096 einzelne Fotodetektoren vorgesehen.

Zwischen der Phosphorschicht 10 und der CCD-Zeile 3 ist ein Lichtwellenleiterbündel 5 angebracht, das sich über die gesamte Breite der CCD-Zeile 3 erstreckt. Das Lichtwellenleiterbündel 5 enthält eine Vielzahl von parallel nebeneinander angeordneten Lichtwellenleitern, die die von den einzelnen angeregten Punkten der Phosphorschicht 10 ausgesandte Strahlung erfassen und den einzelnen Fotodetektoren der CCD-Zeile 3 zuführen. Stellvertretend ist in der Fig. 1 ein Fotodetektor 4 abgebildet, der diejenige Strahlung empfängt, die aufgrund der von einer der Laserdioden der Strahlungsquelle 2 emittierten Laserstrahlung 20 von der Phosphorschicht 10 ausgegeben wird. Jedem der Fotodetektoren der CCD-Zeile 3 ist wenigstens ein Lichtwellenleiter zugeordnet. Solche Lichtwellenleiterbündel 5, die zum Abbilden und Transportieren der von der Phosphorschicht ausgegebenen Lichtstrahlung zu den Fotodetektoren der CCD-Zeile 5 verwendet werden können, sind bekannt und können beispielsweise als sog. "fused fiberoptic faceplates" von der Firma Schott bezogen werden. Vorteilhafterweise kann das Lichtwellenleiterbündel 5 so dotiert werden, daß es gleichzeitig als Filter für die von der Laserstrahlungsquelle 2 ausgegebene und durch die Phosphorschicht 10 hindurchgehende Laserstrahlung wirkt. Anstelle eines Lichtwellenleiterbündels 5 können auch andere Abbildungsmittel, wie beispielsweise ein sog. Selfoclinsen-Array oder eine entsprechende Anordnung mit Mikrolinsen, verwendet werden.

Das Lichtwellenleiterbündel 5 und die CCD-Zeile 3 stellen hier das Empfangsmittel zum Empfangen der von der Phosphorschicht 10 ausgegebenen Lichtstrahlung dar. CCD-Zeite 3 und Lichtwellenleiterbündel 5 sind auf derjenigen Seite des Trägermaterials 9 angeordnet, auf der die Phosphorschicht 10 angebracht ist. Dadurch kann das Lichtwellenleiterbündel 5 sehr nahe an der Oberfläche der Phosphorschicht 10 zur besseren Detektion der von der Phosphorschicht 10 ausgegebenen Lichtstrahlung angeordnet sein. Auf der anderen, gegenüberliegenden Seite des Trägermaterials 9 ohne Phosphorschicht ist die Strahlungsquelle 2 angeordnet. Die von der Strahlungsquelle 2 ausgegebene Laserstrahlung zum Anregen der Phosphorschicht 10 wird, möglichst ohne Streuung, durch das Trägermaterial 9 hindurch zu der Phosphorschicht 10 gerichtet. Das Lichtwellenleiterbündel 5 ist direkt auf die CCD-Zeile 3 aufgesetzt und vorteilhafterweise möglichst nahe an der Phosphorschicht 10 angebracht, um so möglichst viel Lichtstrahlung, die von der Phosphorschicht nach deren Anregen emittiert wird, aufsammeln zu können.

Erfindungsgemäß ist zwischen der Oberfläche der Phosphorschicht 10 und der CCD-Zeile 3 ein Luftlager 30 angeordnet. Dieses Luftlager 30 dient als Abstandsmittel zum Einstellen eines vorgegebenen Abstandes zwischen dem Lichtwellenleiterbündel 5 und der Oberfläche der Phosphorschicht 10. Das Luftlager 30 weist mehrere parallel nebeneinander angeordneten Luftdüsen 31 auf. Diese Luftdüsen 31 sind über Luftkanäle 34 mit einem Lufteinlaß 33 verbunden. Über den Lufteinlaß 33 und die Luftkanäle 34 wird den Luftdüsen 31 Luft zugeführt. Diese zugeführte Luft wird von den Luftdüsen 31 in Richtung der Phosphorschicht 10 mit einem Druck ausgegeben. Dadurch bildet sich zwischen den Luftdüsen und der Phosphorschicht 10 ein vorgegebener Abstand. Dieser Abstand führt zu einem Luftspalt 28 zwischen dem Lichtwellenleiterbündel 5 und der Phosphorschicht 10. Der Abstand soll möglichst klein sein. Durch den Einsatz des Luftlagers 30 läßt sich der sehr kleine Abstand von ca. 10µm einstellen. Eine hohe optische Sammeleffizienz beim Detektieren des von der Phosphorschicht 10 ausgegebenen Lichts ist daher gewährleistet, die eine hervorragende Qualität der Wiedergabe des ausgelesenen Röntgenbildes ermöglicht. Anstelle eines Luftlagers können auch andere Lagerarten, wie z. B. Gleitlager oder Rollenlager, oder auch eine Kombination von verschiedenen Lagerarten verwendet werden.

Die Luftdüsen 31 sind im Ausführungsbeispiel zu beiden Seiten des Lichtwellenleiterbündels 5 angeordnet. Die Form und Größe des Luftlagers 30 können weitgehend frei gewählt werden. Das Luftlager 30 kann sich beispielsweise entlang der gesamten Breite der auszulesenden Zeile erstrecken oder aber als relativ kleine Luftlager nur an den Stirnseiten des Empfangsmittels, d. h. der CCD-Zeile 3 und des Lichtwellenleiterbündels 5, angebracht sein. Vorteilhafterweise kann das Luftlager 30 als entlang der Zeilenrichtung verschiebbares Lager ausgestaltet sein. Dadurch können Fertigungsungenauigkeiten und kleine "Durchbiegungen" des Empfangsmittels, die aufgrund seines Gewichts auftreten können, ausgeglichen werden.

Der Luftspalt 28 wird im wesentlichen durch ein Kräftegleichgewicht gebildet. Dieses entsteht durch eine von der Luftschicht erzeugte Druckkraft in Richtung des Lichtwellenleiterbündels 5 und durch die Schwerkräfte der CCD-Zeile 3, des Luftzuführsystems 33, 34 und des Lichtwellenleiterbündels 5 in Richtung der Phosphorschicht 10. Zur Verstärkung der Kraft, die von dem Lichtwellenleiterbündel 5 bzw. der CCD-Zeile 3 in Richtung der Phosphorschicht 10 ausgeübt wird, kann ein gesondertes Kraftmittel vorgesehen werden. Einfachheitshalber kann dieses Kraftmittel eine Feder 21, insbesondere eine Tellerfeder, sein. Diese Feder 21 ist hier zwischen der CCD-Zeile 3 und einer nicht näher dargestellten Außenumrandung, z. B. einem Gehäuse, der Lesevorrichtung 1 befestigt. Dadurch ist es möglich, ein sehr stabiles Kräftegleichgewicht und damit einen sehr stabilen Abstand zwischen dem Lichtwellenleiterbündel 5 und der Phosphorschicht 10 einzustellen. Die Feder 21 ist dabei so ausgestaltet, daß die von ihr ausgeübte Kraft in eine Kraftrichtung B in Richtung der Phosphorschicht 10 wirkt und damit den Anpreßdruck auf die Luftschicht im Luftspalt 28 erhöht. Durch den hohen Anpreßdruck wird die Oberfläche der Phosphorschicht 10 zusätzlich geglättet, was das Einstellen des vorgegebenen Abstands zwischen Phosphorschicht 10 und Lichtwellenleiterbündel 5 weiter verbessert. Durch die zusätzliche Feder 21 ist Verwendung der Lesevorrichtung 1 unabhängig von ihrer Lage. Das Luftlager 30 kann sowohl bei senkrechter oder waagerechter oder sonstiger Lage der Lesevorrichtung 1 den Luftspalt 28 exakt einstellen.

Zum Auslesen der gesamten Phosphorschicht 10 mittels der Lesevorrichtung 1 wird die Strahlungsquelle 2 mitsamt des auf der gegenüberliegenden Seite der Phosphorschicht 10 angeordneten Empfangsmittels mit CCD-Zeile 3, Lichtwellenleiterbündel 5 und Luftlager 30 zeilenweise in eine Transportrichtung A verschoben. Empfangsmittel 3, 5 und Strahlungsquelle 2 sind dazu vorteilhafterweise starr miteinander verbunden. Somit wird eine Zeile der Phosphorschicht 10 nach der anderen ausgelesen und die entsprechend in ihr abgespeicherte Information detektiert und in elektrische Signale umgewandelt.

Luftlager, die in der Lesevorrichtung 1 zum Erzeugen eines Abstandes zwischen dem Empfangsmittel und der Strahlungsquelle 2 verwendet werden können, sind prinzipiell bekannt und können beispielsweise von der Firma AeroLas GmbH, Unterhaching, Deutschland, bezogen werden. Solche Luftlager werden im übrigen auch in dem Buch "Luftlagerungen" von Wilfried J. Bartz et al., expert-verlag, 2. Auflage, 1993 beschrieben.

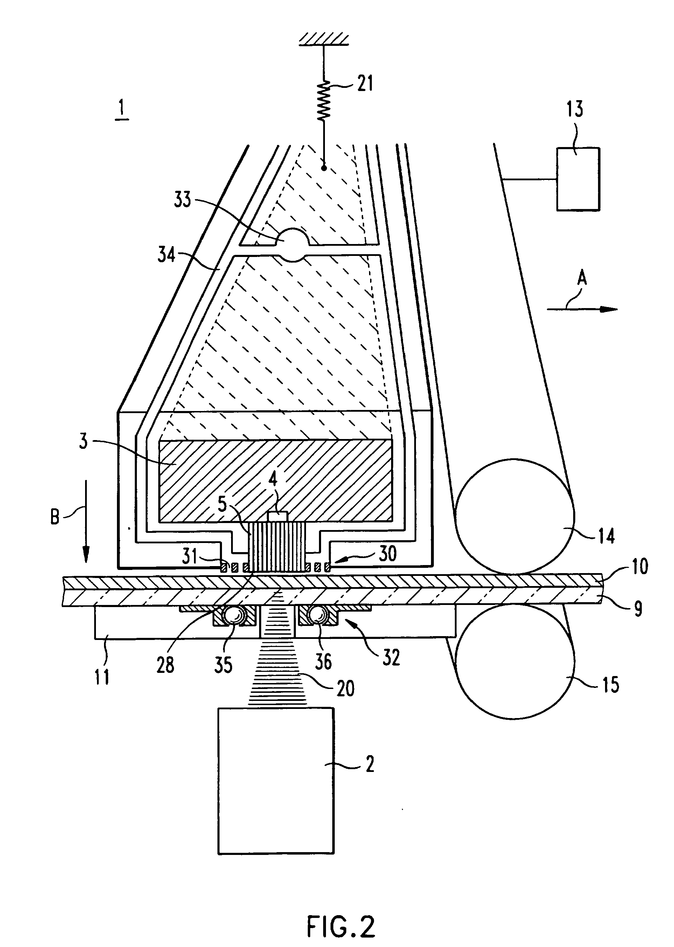

Fig. 2 zeigt eine schematische Darstellung des zweiten Ausführungsbeispiels der Lesevorrichtung 1. Zusätzlich zu dem ersten Ausführungsbeispiel der Lesevorrichtung 1 - wie es anhand der Fig. 1 beschrieben wurde - weist die Lesevorrichtung 1 gemäß der Fig. 2 ein weiteres Luftlager 32 auf, das zwischen dem transparenten Trägermaterial 9 und der Strahlungsquelle 2 angeordnet ist. Der Aufbau dieses weiteren Luftlagers 32 entspricht im wesentlichen demjenigen des Luftlagers 30, das zwischen der Phosphorschicht 10 und der CCD-Zeile 3 bzw. dem Lichtwellenleiterbündel 5 angeordnet ist. Es kann über eine eigenständige, nicht dargestellte Luftzufuhr mit Luft versorgt werden. Es ist aber auch möglich, das weitere Luftlager 32 an die Luftzufuhr für das Luftlager 30 anzukoppeln.

Das weitere Luftlager 32 ist hier in eine Unterlage 11 integriert, auf der u. a. die Strahlungsquelle 2 angeordnet ist. Die Unterlage 11 dient zum Führen des transparenten Trägermaterials 9 und der auf ihm aufgebrachten Phosphorschicht 10. Dies ist insbesondere dann wichtig, wenn das transparente Trägermaterial 9 und die auf ihr aufgebrachte Phosphorschicht 10 beim Auslesen des in der Phosphorschicht 10 gespeicherten Röntgenbildes bewegt wird und die Strahlungsquelle 2, d. h. die CCD-Zeile 3 mitsamt des Lichtwellenleiterbündels 5, in der Lesevorrichtung 1 fest angeordnet ist.

Das weitere Luftlager 32, das in die Unterlage 11 eingebettet ist, enthält vorzugsweise zwei Kugeln 35 und 36. Diese beiden Kugeln 35 und 36 dienen zum Verschließen von in dem weiteren Luftlager 32 vorhandenen Luftdüsen. Wird eine Phosphorschicht mitsamt transparentem Trägermaterial 9 in die Lesevorrichtung 1 eingeschoben, so werden die beiden Kugeln 35 und 36 nach unten gedrückt und zugeführte Luft kann aus den Luftdüsen ausströmen. Sollte sich, insbesondere durch Erschütterungen, durch Verbiegen der Phosphorschicht 10 und des Trägermaterials 9 oder durch erhöhte Luftzufuhr aus den Luftdüsen und damit erhöhten Luftdruck, der Luftspalt zwischen Trägermaterial 9 und Unterlage 11 vergrößern, so werden die Kugeln 35 und 36 automatisch zumindest teilweise in die Austrittsöffnungen der Luftdüsen zurückgepreßt. Dadurch verringert sich der Luftdruck und der Luftspalt zwischen Trägermaterial 9 und Unterlage 11 wird auf die gewünschte, vorgegebene Größe eingestellt. Umgekehrt bewirken die Kugeln 35 und 36 eine erhöhte Luftzufuhr in den Luftspalt des Luftlagers 32, wenn der Luftspalt zu klein wird. Die Kugeln 35 und 36 dienen zum Regeln der Größe des Luftspalts des Luftlagers 32. Die Reibung zwischen Unterlage 11 und Trägermaterial 9 kann somit gering gehalten werden. Ein Verkratzen des Trägermaterials 9 und der Phosphorschicht 10 kann beim Auslesen der Phosphorschicht 10 besser vermieden werden.

Insbesondere in dem Fall, in dem die Phosphorschicht 10 mitsamt transparentem Trägermaterial 9 durch die Lesevorrichtung 1 transportiert wird, ist es vorteilhaft, wenn der Anpreßdruck der CCD-Zeile 3 samt Lichtwellenleiterbündel 5 auf die Phosphorschicht 10 besonders groß ist. Dadurch wird die Phosphorschicht 10 bei ihrem Auslesen auf das transparente Trägermaterial 9 gedrückt und geglättet. Dickenschwankungen der Phosphorschicht 10 können somit zumindest teilweise ausgeregelt werden. Beim Transportieren der Phosphorschicht 10 in Transportrichtung A zum Auslesen des in ihr abgespeicherten Röntgenbildes kann der Abstand 28 exakt eingestellt werden. Der zwischen dem Trägermaterial 9 und der Unterlage 11 einzuhaltende und über das weitere Luftlager 32 einzustellende Abstand muß nicht notwendigerweise so exakt eingestellt werden wie derjenige Abstand zwischen der Phosphorschicht 10 und dem Lichtwellenleiterbündel 5.

Zum Antreiben der Phosphorschicht 10 und des transparenten Trägermaterials 9 in Transportrichtung A enthält die Lesevorrichtung 1 eine oberhalb der Phosphorschicht 10 angeordnete erste Transportrolle 14 und eine unterhalb des transparenten Trägermaterials 9 angeordnete zweite Transportrolle 15. Diese können mittels eines Antriebsmotors 13, mit dem sie in Verbindung stehen, angesteuert und gedreht werden. Dadurch kann ein Vorschub der Phosphorschicht 10 in Richtung A bewirkt werden. Es sind aber auch andere Arten von Antrieb einsetzbar.

Fig. 3 zeigt eine schematische Darstellung des dritten Ausführungsbeispiels der vorliegenden Erfindung. Die Auslesevorrichtung 1 ist hier als sog. "flying spot"-Lasersystem ausgestaltet. Der grundlegende Aufbau eines solchen "flying spot"-Lasersystems ist bereits bekannt, z. B. aus der europäischen Patentanmeldung EP 0 777 148 A1. In der Fig. 3 ist ein Laser 50 dargestellt, der einen Laserstrahl 52 emittiert. Dieser Laserstrahl 52 wird über einen Kollimator 51 auf einen sich um eine Drehachse D drehenden Polygonspiegel 53 gerichtet. Der Polygonspiegel 53 lenkt den Laserstrahl 52 in Richtung einer Phosphorschicht 54. Durch das Drehen des Polygonspiegels um die Drehachse D wird der Laserstrahl 52 entlang einer Zeilenausbreitungsrichtung C gelenkt. Dabei wird nacheinander jeder Punkt einer Zeile der Phosphorschicht 54 angeregt. Der Vorschub der Phosphorschicht 54 erfolgt zeilenweise, so daß sie zeilenweise ausgelesen wird. Das aufgrund der Anregung mittels des Laserstrahls 52 von der Phosphorschicht 54 emittierte Licht wird von einem Faserquerschnittswandler 57, der Lichtleiter enthält, aufgesammelt und einem Fotodetektor 58 zugeführt. Auf diese Weise wird das in der Phosphorschicht 54 abgespeicherte Röntgenbild punkt- und zeilenweise ausgelesen.

Erfindungsgemäß weist die Auslesevorrichtung 1 gemäß dem dritten Ausführungsbeispiel ein drittes Luftlager 56 auf, das an der Längsseite des Faserquerschnittswandlers 57 entlang Zeilenrichtung C angebracht ist. Das dritte Luftlager 56 ist im wesentlichen so ausgestaltet wie die beiden Luftlager 30 und 32 gemäß dem ersten und zweiten Ausführungsbeispiel. Mittels des dritten Luftlagers 56 wird zwischen der Phosphorschicht 54 und dem Faserquerschnittswandler 57 ein kleiner Luftspalt 59 gebildet. Dadurch kann wiederum verhindert werden, daß sich Phosphorschicht 54 und Faserquerschnittswandler 57 während der Vorschubbewegung der Phosphorschicht 54 berühren. Aufgrund des Luftspaltes 59 ist auch bei der Lesevorrichtung 1 gemäß dem dritten Ausführungsbeispiel ein möglichst kleiner und konstanter Abstand zwischen Phosphorschicht 54 und Faserquerschnittswandler 57 einstellbar.

Die Lesevorrichtung 1 gemäß der oben beschriebenen Ausführungsbeispiele kann sowohl eigenständig, z. B. in Form einer Röntgenkassette ausgestaltet sein, in der alle notwendigen, beschriebenen Komponenten zum Auslesen der Phosphorschicht enthalten sind. Es ist allerdings ebenso möglich, die beschriebene Lesevorrichtung 1 in einem Röntgen-Untersuchungstisch zu integrieren. Sowohl Phosphorschicht als auch Strahlungsquelle und Empfangsmittel können in einem solchen Röntgen-Untersuchungstisch eingebaut sein.

## Patentansprüche

1. Vorrichtung (1) zum Auslesen von in einer Speicherschicht (10) abgespeicherten Informationen mit
- einer Strahlungsquelle (2) zum Aussenden von einer Anregungsstrahlung (20),
- einem Empfangsmittel (3) zum Empfangen einer von der Speicherschicht (10) ausgesandten Emissionsstrahlung und
- einem Antriebsmittel (13, 14, 15) zum Ausführen einer Relativbewegung zwischen dem Empfangsmittel (3) und der Speicherschicht (10),
wobei
zwischen dem Empfangsmittel (3) und der Speicherschicht (10) ein Abstandsmittel (30, 56) zum Einstellen eines vorgegebenen Abstandes beim Ausführen der Relativbewegung zwischen dem Empfangsmittel (3) und der Speicherschicht (10) angeordnet ist,
**dadurch gekennzeichnet, daß**
- das Abstandsmittel (30, 56) ein Luftlager (30, 56) zum Einstellen des vorgegebenen Abstandes zwischen dem Empfangsmittel (3) und der Speicherschicht (10) umfasst und
- zwischen Strahlungsquelle (2) und Speicherschicht (10) ein weiteres Abstandsmittel (32) in Form eines weiteren Luftlagers (32) angeordnet ist.

2. Vorrichtung nach Anspruch 1, **dadurch gekennzeichnet, daß** das Luftlager (30, 56) Luftdüsen (31) enthält.

3. Vorrichtung nach Anspruch 1 oder 2, **dadurch gekennzeichnet, daß** das Luftlager (30, 56) nur an den Stirnseiten des Empfangsmittels (3) angebracht ist.

4. Vorrichtung nach einem der vorhergehenden Ansprüche, **dadurch gekennzeichnet, daß** sie ein transparentes Trägermaterial (9) enthält, auf das die auszulesende Speicherschicht (10) aufgebracht ist, und die Strahlungsquelle (2) auf derjenigen Seite des Trägermaterials (9) angeordnet ist, die der Speicherschicht (10) abgewandt ist, und das Empfangsmittel (3) auf derjenigen Seite des Trägermaterials (9) angeordnet ist, die der Speicherschicht (10) zugewandt ist.

5. Vorrichtung nach einem der vorhergehenden Ansprüche, **dadurch gekennzeichnet, daß** die Speicherschicht (10) fest in der Vorrichtung (1) angeordnet ist.

6. Vorrichtung nach einem der vorhergehenden Ansprüche, **dadurch gekennzeichnet, daß** das Empfangsmittel (3) ein optisches Abbildungsmittel (5) aufweist, mit dem von der angeregten Speicherschicht (10) ausgesandte Emissionsstrahlung erfaßbar ist.

7. Vorrichtung nach Anspruch 6, **dadurch gekennzeichnet, daß** das Abbildungsmittel (5) Lichtwellenleiter aufweist.

8. Vorrichtung nach einem der vorhergehenden Ansprüche, **dadurch gekennzeichnet, daß** die Strahlungsquelle (2) eine Linienlichtquelle zum Anregen einer Zeile der Speicherschicht (10) ist und das Empfangsmittel (3) eine Vielzahl von Punktelementen (4) zum punktweisen Empfangen von Emissionsstrahlung aufweist, wobei von der angeregten Zeile der Speicherschicht (10) ausgesandte Emissionsstrahlung durch die Punktelemente (4) gleichzeitig empfangbar ist.

9. Vorrichtung nach einem der vorhergehenden Ansprüche, **dadurch gekennzeichnet, daß** sie ein Kraftmittel (21) aufweist, mit dem eine Kraft von dem Empfangsmittel (3, 5) auf das Abstandsmittel (30, 56) in Richtung der Speicherschicht (10) ausgeübt werden kann.

10. Vorrichtung nach Anspruch 9, **dadurch gekennzeichnet, daß** das Kraftmittel (21) eine Feder aufweist.

11. Vorrichtung nach einem der vorhergehenden Ansprüche, **dadurch gekennzeichnet, daß** die Strahlungsquelle (2) und das Empfangsmittel (3) starr miteinander verbunden sind.

## Claims

1. A device (1) for reading out information stored in a storage layer (10) comprising
- a radiation source (2) for emitting a stimulation radiation (20),
- a receiving means (3) for receiving an emission radiation emitted by the storage layer (10) and
- a drive means (13, 14, 15) for carrying out a relative movement between the receiving means (3) and the storage layer (10),
wherein
a spacing means (30, 56) for setting a pre-specified spacing during the carrying out of the relative movement between the receiving means (3) and the storage layer (10) is arranged between the receiving means (3) and the storage layer (10),
**characterised in that**
- the spacing means (30, 56) comprises an air bearing (30, 56) for setting the pre-specified spacing between the receiving means (3) and the storage layer (10) and
- an additional spacing means (32) is arranged between radiation source (2) and storage layer (10) in the form of an additional air bearing (32).

2. Device according to claim 1, wherein the air bearing (30, 56) contains air nozzles (31).

3. Device according to claim 1 or 2, wherein the air bearing (30, 56) is positioned only at the end faces of the receiving means (3).

4. Device according to any of the preceding claims, wherein it contains a transparent substrate (9) to which the storage layer (10) to be read out is applied and wherein the radiation source (2) is arranged on that side of the substrate (9) that is facing away from the storage layer (10) and wherein the receiving means (3) is arranged on that side of the substrate (9) that is facing the storage layer (10).

5. Device according to any of the preceding claims, wherein the storage layer (10) is fixedly arranged in the device (1).

6. Device according to any of the preceding claims, wherein the receiving means (3) exhibits an optical imaging means (5) by means of which the emission radiation emitted by the stimulated storage layer (10) can be captured.

7. Device according to claim 6, wherein the imaging means (5) exhibits optical waveguides.

8. Device according to any of the preceding claims, wherein the radiation source (2) is a linear light source for stimulating a line of the storage layer (10) and the receiving means (3) exhibits a plurality of point elements (4) for receiving emission radiation point by point, the emission radiation emitted by the stimulated line of the storage layer (10) being simultaneously receivable by the point elements (4).

9. Device according to any of the preceding claims, wherein it exhibits a force means (21) by means of which a force can be applied by the receiving means (3, 5) to the spacing means (30, 56) in the direction of the storage layer (10).

10. Device according to claim 9, wherein the force means (21) exhibits a spring.

11. Device according to any of the preceding claims, wherein the radiation source (2) and the receiving means (3) are rigidly interconnected.

## Revendications

1. Dispositif (1) de lecture d'informations enregistrées dans une couche de mémorisation (10), comprenant :
- une source de rayonnement (2) servant à émettre un rayonnement d'excitation (20) ;
- un moyen de réception (3) servant à recevoir un rayonnement d'émission émis par la couche de mémorisation (10) ; et
- un moyen d'entraînement (13, 14, 15) servant à exécuter un mouvement relatif entre le moyen de réception (3) et la couche de mémorisation (10) ;
dispositif dans lequel un moyen d'écartement (30, 56) servant à établir un écartement fixé à l'avance pour l'exécution du mouvement relatif entre le moyen de réception (3) et la couche de mémorisation (10) est disposé entre le moyen de réception (3) et la couche de mémorisation (10),
**caractérisé en ce que**
- le moyen d'écartement (30, 56) comprend un palier pneumatique (30, 56) servant à établir l'écartement fixé à l'avance entre le moyen de réception (3) et la couche de mémorisation (10), et
- un autre moyen d'écartement (32), sous la forme d'un autre palier pneumatique (32), est disposé entre la source de rayonnement (2) et la couche de mémorisation (10).

2. Dispositif selon la revendication 1, **caractérisé en ce que** le palier pneumatique (30, 56) comporte des buses à air (31).

3. Dispositif selon la revendication 1 ou 2, **caractérisé en ce que** le palier pneumatique (30, 56) n'est placé que sur les faces frontales du moyen de réception (3).

4. Dispositif selon l'une des revendications précédentes, **caractérisé en ce que** ledit dispositif comprend un support transparent (9) sur lequel la couche de mémorisation à lire (10) est appliquée, et la source de rayonnement (2) est disposée du côté du support (9) qui est détourné de la couche de mémorisation (10) et le moyen de réception (3) est disposé du côté du support (9) qui est tourné vers la couche de mémorisation (10).

5. Dispositif selon l'une des revendications précédentes, **caractérisé en ce que** la couche de mémorisation (10) est disposée solidement dans le dispositif (1).

6. Dispositif selon l'une des revendications précédentes, **caractérisé en ce que** le moyen de réception (3) comporte un moyen de représentation optique (5) avec lequel on peut capter un rayonnement d'émission émis par la couche de mémorisation excitée (10).

7. Dispositif selon la revendication 6, **caractérisé en ce que** le moyen de représentation (5) comporte des conducteurs d'ondes lumineuses.

8. Dispositif selon l'une des revendications précédentes, **caractérisé en ce que** la source de rayonnement (2) est une source lumineuse linéaire servant à exciter une ligne de la couche de mémorisation (10) et le moyen de réception (3) comporte une pluralité d'éléments ponctuels (4) servant à la réception point par point du rayonnement d'émission, le rayonnement d'émission émis par la ligne excitée de la couche de mémorisation (10) pouvant être reçu simultanément par les éléments ponctuels (4).

9. Dispositif selon l'une des revendications précédentes, **caractérisé en ce que** ledit dispositif comporte un moyen dynamique (21) avec lequel une force peut être exercée par le moyen de réception (3, 5) sur le moyen d'écartement (30, 56) en direction de la couche de mémorisation (10).

10. Dispositif selon la revendication 9, **caractérisé en ce que** le moyen dynamique (21) comporte un ressort.

11. Dispositif selon l'une des revendications précédentes, **caractérisé en ce que** la source de rayonnement (2) et le moyen de réception (3) sont reliés ensemble de manière rigide.
